# EUROPEAN PATENT APPLICATION

(11) **EP 2 615 328 A1**
(43) Date of publication of application: **17.07.2013**
(21) Application number: 11823518.3
(22) Date of filing: 05.09.2011
(51) Int. Cl.: F16H 1/32, F16C 19/06, F16C 33/38, F16C 33/44, F16C 33/46, F16C 33/66, F16C 35/06

(54) **REDUCTION DEVICE**

(30) Priority: 25.02.2011 JP 2011039829; 24.02.2011 JP 2011038449; 09.09.2010 JP 2010201800
(71) Applicant: NTN Corporation, Osaka-shi, Osaka 550-0003 (JP)
(72) Inventor: SATO Koji, Iwata-shi Shizuoka 438-0037 (JP); AKIYOSHI Koji, Iwata-shi Shizuoka 438-0037 (JP); NAKAKOJI Masafumi, Iwata-shi Shizuoka 438-0037 (JP); SAITO Takahide, Iwata-shi Shizuoka 438-0037 (JP); UTSUNOMIYA Satoshi, Iwata-shi Shizuoka 438-0037 (JP)
(74) Representative: Grünecker, Kinkeldey, Stockmair & Schwanhäusser
(86) International application number: PCT/JP2011/070141
(87) International publication number: WO 2012/033043

(57) **Abstract**

A speed reducer is proposed which can maintain high efficiency by stably and inseparably keeping roller guiding bearings press-fitted on two eccentric disks of an input shaft. The input shaft (7) is provided coaxially with a stationary internal gear (3). The input shaft (7) carries the two eccentric disks (9) so as to be rotatable in the internal gear (3). The roller guiding bearings (11) are press-fitted on the radially outer surfaces of the respective eccentric disks (9). An output shaft (12) is provided coaxially with the input shaft (7) and has at the end thereof a cage (15) which is rotatable between the internal gear (3) and the eccentric disks (9). The cage (15) has roller receiving pockets (18) in two rows, each row of pockets being fewer in number than the internal teeth (4) of the internal gear (3). Rollers (19) are received in the respective roller receiving pockets (18). When the eccentric disks (9) rotate together with the input shaft (7), each roller (19) is adapted to mesh with the internal teeth (4) of the internal gear (3) one after another such that every time the input shaft (7) rotates once, each roller (19) moves circumferentially by a distance equal to one internal tooth (4), thereby rotating the output shaft (12) at a reduced speed. An annular protrusion (21) is provided between the two eccentric disks (9), and crimped protrusions (22) are formed on the ends of the respective eccentric disks (9) opposite to the axially facing ends of the respective eccentric disks (9). The crimped protrusions (22) and the annular protrusion (21) prevent axial movement of the bearings (11).

## Description

### TECHNICAL FIELD

This invention relates to a roller type speed reducer including an internal gear and rollers adapted to mesh with the internal teeth of the internal gear one after another when the input shaft is rotated, thereby transmitting the rotation of the input shaft to the output shaft after reducing the speed.

### BACKGROUND ART

This type of speed reducer is disclosed in the below-identified Patent document 1. The roller type speed reducer disclosed in Patent document 1 includes input and output shafts arranged coaxially with each other with their ends facing each other, a housing covering the axially facing end portions of the input and output shafts, an internal gear supported by the housing and having a plurality of curved internal teeth formed on the inner periphery thereof. The input shaft carries, at the end portion thereof located inside the housing, two axially spaced apart eccentric disks which are rotatable inside the internal gear. The output shaft has, at its end portion located inside the housing, a cage disposed between the internal gear and rolling bearings mounted on the radially outer surfaces of the respective eccentric disks. The cage has a plurality of circumferentially equidistantly spaced apart pockets in two rows, each row of pockets facing one of the eccentric disks and fewer than the number of the internal teeth. Rollers are received in the respective pockets so as to mesh with the internal teeth of the internal gear one after another while rolling along the radially outer surfaces of the bearings.

In this arrangement, when the input shaft rotates and thus the eccentric disks rotate together with the input shaft, the rollers mesh with the internal teeth of the internal gear one after another such that each roller is circumferentially displaced by the distance equal to the width of one internal tooth every time the input shaft rotates once. The output shaft thus rotates at a reduced speed.

In order to smoothly transmit rotation, in the speed reducer disclosed in Patent document 1, each internal tooth has a curved shape which coincides with the path of the outer portion of one roller which is parallel to the path of the center of this roller when the output shaft is rotated by an angle corresponding to one pitch of the internal teeth of the internal gear by the eccentric disks such that all the rollers contact internal teeth.

Further, in order to smoothly rotate the input and output shafts, the input shaft and the output shaft are rotatably supported by individual rolling bearings. Since thrust loads scarcely act on the input and output shafts, or on the rolling bearings mounted on the eccentric disks, ball bearings are ordinarily used as these rolling bearings.

When the input shaft of the speed reducer is rotated at a high speed, the retainers of the ball bearings may be deformed due to centrifugal force applied to the retainers. In order to prevent deformation of the retainers due to centrifugal force, it is important to reduce the weight of the retainers. Thus, as disclosed e.g. in the below-identified Patent document 2, retainers made of a synthetic resin are used in ball bearings in a speed reducer.

### PRIOR ART DOCUMENTS

### PATENT DOCUMENTS

Patent document 1: JP Patent Publication 62-93565A
Patent document 2: JP Patent Publication 2009-115128A

### SUMMARY OF THE INVENTION

### OBJECT OF THE INVENTION

In the above-described speed reducer, since the roller guiding ball bearings provided on the radially outer surfaces of the eccentric disks are press-fitted on the eccentric disks, if the input shaft is inclined even slightly, axial loads tend to act on the roller guiding ball bearings, which could cause separation of either or both of the roller guiding ball bearings from the respective eccentric disks. If either of the ball bearings separates from the eccentric disk, the ball bearing will contact e.g. the inner surface of the housing, thus generating rotational resistance due to contact friction. Such rotational resistance impairs smooth rotation of the input shaft, reducing efficiency of the speed reducer. It is desired to avoid this problem by improving how the roller guiding ball bearings are mounted.

This type of speed reducers are mainly used in motor vehicles such that the ball bearings mounted on the radially outer surfaces of the eccentric disks, as well as the ball bearings rotatably supporting the input shaft and the output shaft, are dipped in oil bath and lubricated by oil. When the input shaft is rotated at high speed, the balls of these ball bearings shear lubricating oil present between the balls and the inner surfaces of the pockets. Since such shearing force increases rotational resistance, the conventional ball bearings tend to increase torque loss, thus lowering efficiency of the speed reducer. Therefore, there is still room to further improve the efficiency of the speed reducer.

In conventional such speed reducers, the roller receiving pockets have a circumferential width larger than the outer diameter of the rollers. Thus, during assembly of the speed reducer, when the eccentric disks of the input shaft are fitted into the cage or when the cage is fitted into the internal gear supported by the housing, with the rollers received in the respective pockets, rollers could fall out of the pockets. It is therefore necessary to keep the rollers received in the respective pockets while assembling the speed reducer. This makes assembly of the speed reducer troublesome. Thus, it is desired to more easily assemble the speed reducer.

In a conventional speed reducer, the portion of the output shaft to which the flange is connected is rotatably supported by axially spaced apart two bearings mounted in the housing at its open end portion. This is because if the output shaft is supported by a single bearing, the output shaft tends to be inclined by the torque transmitted from the rollers to the cage. The two axially spaced apart bearings increase the axial length of the speed reducer. Thus, there is room to further reduce the axial length of such conventional speed reducers.

A first object of the present invention is to maintain high efficiency of the speed reducer by stably and inseparably mounting the roller guiding bearings press-fitted on the eccentric disks of the input shaft, and to maintain low shear resistance of lubricating oil by the balls.

A second object of the invention is to provide a speed reducer which can be assembled more easily.

A third object of the invention is to provide a speed reducer having a reduced axial length.

### MEANS FOR ACHIEVING THE OBJECT

In order to achieve the first object, the first invention provides a speed reducer comprising a stationary internal gear, an input shaft carrying two eccentric disks at one end portion of the input shaft so as to rotate together with the input shaft, roller guiding bearings press-fitted on radially outer surfaces of the respective eccentric disks, an output shaft provided coaxially with the input shaft and including a flange at one end portion of the output shaft, a cage provided on one side surface of the flange facing the one end portion of the input shaft and rotatable between the internal gear and the eccentric disks, the cage having first and second sets of circumferentially equidistantly spaced apart roller receiving pockets radially facing the respective eccentric disks, each of the first and second sets of pockets being fewer than the number of internal teeth formed on an inner periphery of the internal gear, and rollers received in the respective roller receiving pockets so as to mesh with the internal teeth, whereby when the input shaft rotates once, the respective rollers move circumferentially by a distance equal to one internal tooth while meshing with the internal teeth one after another, thereby rotating the output shaft at a reduced speed, wherein the speed reducer further comprises anti-separation means for preventing axial movement of the respective roller guiding bearings, which are press-fitted on the respective eccentric disks.

Specific anti-separation means are shown below:
Anti-separation means a: including an annular protrusion provided between the two eccentric disks, and crimped protrusions formed on outer peripheral portions of ends of the respective eccentric disks remote from axially facing ends of the respective eccentric disks;
Anti-separation means b: including a spacer fitted between the two eccentric disks, and crimped protrusions formed on outer peripheral portions of ends of the respective eccentric disks remote from axially facing ends of the respective eccentric disks;
Anti-separation means c: including a snap ring mounted between the two eccentric disks, and crimped protrusions formed on outer peripheral portions of ends of the respective eccentric disks remote from axially facing ends of the respective eccentric disks;
Anti-separation means d: including an annular protrusion provided between the two eccentric disks, and snap rings mounted to outer peripheral portions of ends of the respective eccentric disks remote from axially facing ends of the respective eccentric disks;
Anti-separation means e: including a spacer fitted between the two eccentric disks, and snap rings mounted to outer peripheral portions of ends of the respective eccentric disks remote from axially facing ends of the respective eccentric disks; and
Anti-separation means f: including a snap ring mounted between the two eccentric disks, and snap rings mounted to outer peripheral portions of ends of the respective eccentric disks remote from axially facing ends of the respective eccentric disks.

Any of the above-described anti-separation means can keep the roller guiding bearings axially in position, thereby keeping the bearings stably and inseparably mounted in position, thus maintaining high efficiency of the speed reducer.

Preferably, the roller guiding bearings, the bearings rotatably supporting the input shaft, and the bearings rotatably supporting the output shaft are ball bearings including inner and outer races, balls disposed between the inner and outer races, and a retainer made of synthetic resin and retaining the balls, wherein the retainer comprises two axially facing annular members each formed with circumferentially equidistantly spaced apart hemispherical ball receiving pockets in a surface facing the other annular member, and wherein circumferentially adjacent pair of the hemispherical pockets define a pillar therebetween through which an axial hole is formed.

When lubricating oil flows through such bearings, lubricating oil partially flows through the axial holes extending axially through the respective pillars of each annular member. This reduces the amount of lubricating oil flowing through the space between the radially outer surface of the inner race and the radially inner surface of the retainer or the space between the radially inner surface of the outer race and the radially outer surface of the retainer and into the gaps between the ball receiving pockets and the respective balls. This in turn reduces the resistance of lubricating oil by the balls, thus lowering torque loss resulting from the ball bearings.

A recess may be formed in the inner periphery of each of the ball receiving pockets. Such a recess reduces the contact surface area between the inner periphery of the ball receiving pocket and the ball, thereby further reducing the shear resistance of lubricating oil by the balls.

Preferably, each of the annular members is formed with radially extending flanges at an axial end of the annular member. With this arrangement, it is possible to define labyrinths between the flanges and the portions of the inner and outer races opposed to the flanges. The labyrinths reduce the amount of lubricating oil flowing into the bearing, thus further reducing the shear resistance of lubricating oil by the balls.

Further preferably, each of the annular members has a radially outer protrusion axially extending from the radially outer portion of one circumferential end of each ball receiving pocket and defining a spherical inner surface continuous with the spherical inner surface of the ball receiving pocket, and a radially inner recess formed radially inwardly of the radially outer protrusion, wherein at the other circumferential end of each ball receiving pocket, a radially inner protrusion extends axially from the radially inner portion of the other end of the pocket so as to define a spherical inner surface continuous with the spherical inner surface of the ball receiving pocket, wherein a radially outer recess is formed radially outwardly of the radially inner protrusion, whereby when the radially outer protrusions of each of the annular members are inserted into the respective radially outer recesses of the other annular member, the radially outer protrusions axially engage the respective radially inner protrusions, and wherein engaging surfaces of the radially outer protrusions and the radially inner protrusions are inclined in the axial direction such that each of the radially outer protrusions and the radially inner protrusions has a larger wall thickness at a distal end thereof than at a proximal end thereof. With this arrangement, it is possible to rigidly couple the two annular members together in the axial direction, thereby preventing axial separation of the annular members.

Since these two annular members are identical in shape, they can be formed with a single mold and thus at a low cost.

When the two annular members are coupled together by the engagement of the radially inner and outer protrusions, the radially inner protrusions preferably have a larger wall thickness than the radially outer protrusions. With this arrangement, since the radially inner protrusions have a larger mass than the radially outer protrusions, when a large centrifugal force acts during high-speed rotation, the radially inner protrusions are deformed radially outwardly to a greater degree, thus increasing the coupling force between the engaging surfaces. This further reliably prevents axial separation of the two annular members.

The annular members are preferably formed from a synthetic resin which is superior in lubricating properties and wear resistance, such as polyamide resin, polyetheretherketone resin, or polyphenylene sulfide resin.

In order to achieve the second object, the second invention provides a speed reducer wherein each of the roller receiving pockets includes stopper means for preventing the roller received in the roller receiving pocket from coming out of the pocket through at least one of openings of the pocket at radially inner and outer surfaces of the cage.

When assembling this speed reducer, if the stopper means are arranged so as to prevent the rollers from coming out of the respective roller receiving pockets through the radially outer openings of the pockets, the rollers are inserted into the respective roller receiving pockets from radially inside the cage, and then the the eccentric disks are fitted into the cage, thereby preventing the rollers from coming out of the pockets both radially inwardly and radially outwardly of the cage. In this state, the cage is mounted in the internal gear.

If the stopper means are arranged so as to prevent the rollers from coming out of the respective roller receiving pockets through the radially inner openings of the pockets, the rollers are inserted into the respective roller receiving pockets from radially outside the cage, and then the cage is fitted into the internal gear, thereby preventing the rollers from coming out of the pockets both radially inwardly and radially outwardly of the cage. In this state, the eccentric disks are fitted into the cage.

By the provision of the stopper means for preventing the rollers from coming out of the respective roller receiving pockets through at least one of the openings of the pocket at the radially inner and radially outer surfaces of the cage, it is possible to eliminate the necessity of keeping the rollers so as not to come out of the roller receiving pockets while assembling the speed reducer, thus making it easier to assemble the speed reducer.

The stopper means may comprise pairs of protrusions, each pair being provided on circumferentially opposed pair of side surfaces of each of the roller receiving pockets, respectively, at least at one of inner and outer ends of each side surface with respect to the radial direction of the cage, so as to be spaced apart from each other by a smaller distance than the outer diameter of the roller. Otherwise, the stopper means may comprise a tubular member fitted in the radially inner surface or the radially outer surface of the cage and formed with rectangular windows facing the respective pockets of the cage and having a circumferential width smaller than the outer diameter of the rollers.

In the arrangement in which the stopper means comprises protrusions, such protrusions may be crimped projections formed by crimping portions of the pockets near openings of the pockets, or may each be an axially continuous rib.

In order to achieve the third object, according to the third invention, a pair of radial bearing surfaces are formed on an inner side of the housing which guides, by metal-to-metal contact, the radially outer surface of the flange and the radially outer surface of the cage at the open end portion of the cage, respectively.

By the provision of the pair of radial bearing surfaces on the inner side of the housing which guides, by metal-to-metal contact, the radially outer surface of the flange and the radially outer surface of the cage at the open end portion of the cage, respectively, compared to a speed reducer in which the output shaft is rotatably supported by the double row bearings, it is possible to reduce the axial length, as well as the cost, of the speed reducer. Since the radially outer surface of the flange and the radially outer surface of the cage at the open end portion of the cage, which are supported by the respective pair of radial bearing surfaces, are located close to the rollers through which torque is transmitted to the cage, the radial bearing surfaces effectively prevent inclination and run-out of the output shaft, thus ensuring stable rotation of the output shaft.

The pair of radial bearing surfaces may both be directly formed on the radially inner surface of the housing. Otherwise, only the radial bearing surface for guiding, by metal-to-metal contact, the radially outer surface of the flange may be directly formed on the radially inner surface of the housing, with the other radial bearing surface, i.e. the surface supporting the radially outer surface of the cage at its open end portion, formed on the radially inner surface of the internal gear.

Preferably, the pair of radial bearing surfaces are formed with minute recesses for retaining lubricating oil, by shot peening so as to prevent seizure on the radial bearing surfaces by lubricating oil retained in the minute recesses.

Preferably, the housing is formed with thrust bearing surfaces axially facing the outer peripheral portion of the other side surface of the flange and the end surface of the cage at the open end of the cage, respectively. With this arrangement, since the cage and the output shaft can be axially positioned by the thrust bearing surfaces, and also thrust loads applied to the cage are supported by the thrust bearing surfaces, it is possible to prevent axial movement of the output shaft, thus ensuring stable transmission of torque.

### ADVANTAGES OF THE INVENTION

The speed reducer according to the first invention includes the anti-separation means for preventing axial movement of each of the roller guiding bearings press-fitted on the respective eccentric disks. This makes it possible to keep the roller guiding bearings stably and inseparably mounted in position, thereby keeping high efficiency of the speed reducer.

According to the second invention, by providing each of the roller receiving pockets with the stopper means for preventing the roller received in the roller receiving pocket from coming out of the pocket through at least one of the openings of the pocket at the radially inner and outer surfaces of the cage, it becomes unnecessary to keep the rollers so as not to come out of the pockets while assembling the speed reducer. The speed reducer can thus be assembled easily.

According to the third invention, by the provision of the pair of radial bearing surfaces on the inner side of the housing for supporting the radially outer surface of the flange and the radially outer surface of the cage at its open end portion, respectively, it is possible to reduce the axial length of the speed reducer.

### BRIEF DESCRIPTION OF THE DRAWINGS

Fig. 1 is a vertical sectional front view of a speed reducer embodying the present invention.
Fig. 2 is a sectional view taken along line II-II of Fig. 1.
Fig. 3 is an enlarged sectional view of a portion of Fig. 2 where roller guiding bearings are mounted.
Fig. 4 is a sectional view showing a different anti-separation means for preventing separation of the roller guiding bearings.
Fig. 5 is a sectional view showing a still different anti-separation means.
Fig. 6 is a sectional view showing a yet different anti-separation means.
Fig. 7 is a sectional view showing a further different anti-separation means.
Fig. 8 is a sectional view showing a still different anti-separation means.
Fig. 9 is a sectional view of a ball bearing used in the speed reducer.
Fig. 10 is a perspective view of a retainer of the ball bearing of Fig. 9.
Fig. 11 is an exploded perspective view of the retainer of Fig. 10.
Fig. 12 is a plan view of a portion of the retainer of Fig. 9.
Fig. 13 is a sectional view taken along line XIII-XIII of Fig. 12.
Fig. 14 is a sectional view taken along line XIV-XIV of Fig. 12.
Fig. 15 is plan view of a different retainer.
Fig. 16 is a sectional view taken along line XVI-XVI of Fig. 15.
Fig. 17 is a sectional view of a different ball bearing.
Fig. 18 is a sectional view showing means for preventing the roller from radially outwardly coming out of the pocket.
Fig. 19 is a sectional view showing means for preventing the roller from radially inwardly coming out of the pocket.
Fig. 20 is a sectional view showing another means for preventing the roller from radially outwardly coming out of the pocket.
Fig. 21 is an enlarged sectional view of a portion of Fig. 20.
Fig. 22 is a sectional view showing another means for preventing the roller from radially inwardly coming out of the pocket.
Fig. 23 is a vertical sectional front view of another speed reducer embodying the present invention.
Fig. 24 is an enlarged sectional view of a portion of Fig. 23.
Fig. 25 is a sectional view of a still different speed reducer embodying the present invention.
Fig. 26 is a sectional view of a further different speed reducer embodying the present invention.

### BEST MODE FOR EMBODYING THE INVENTION

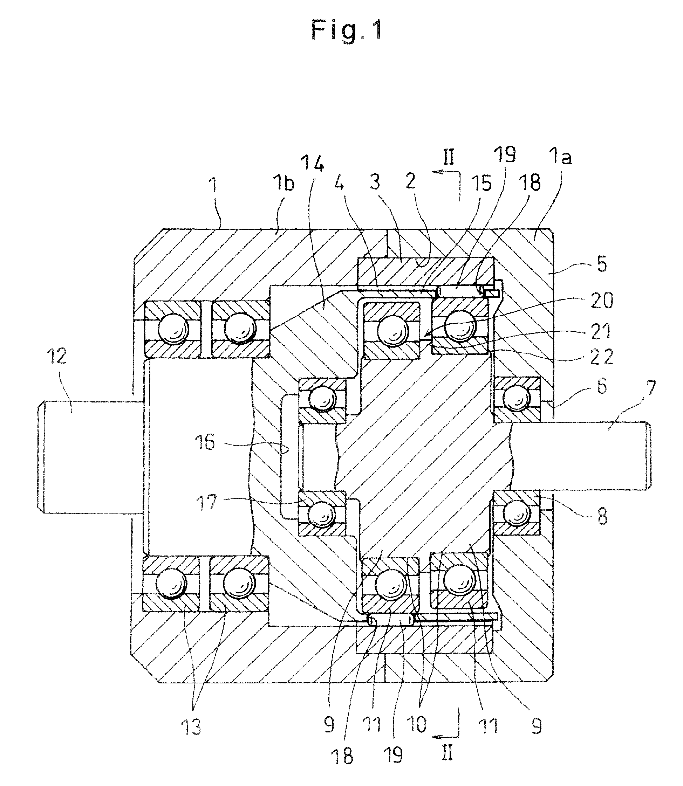

The embodiments are now described with reference to the drawings. As shown in Fig. 1, the housing 1 is a cylindrical member including first and second separate split housing portions 1a and 1b axially facing each other.

The first and second split housing portions 1a and 1b are joined together by tightening bolts, not shown. A large-diameter recess 2 is formed in the radially inner surface of the housing 1 so as to extend across the abutting ends of the first and second split housing portions 1a and 1b.

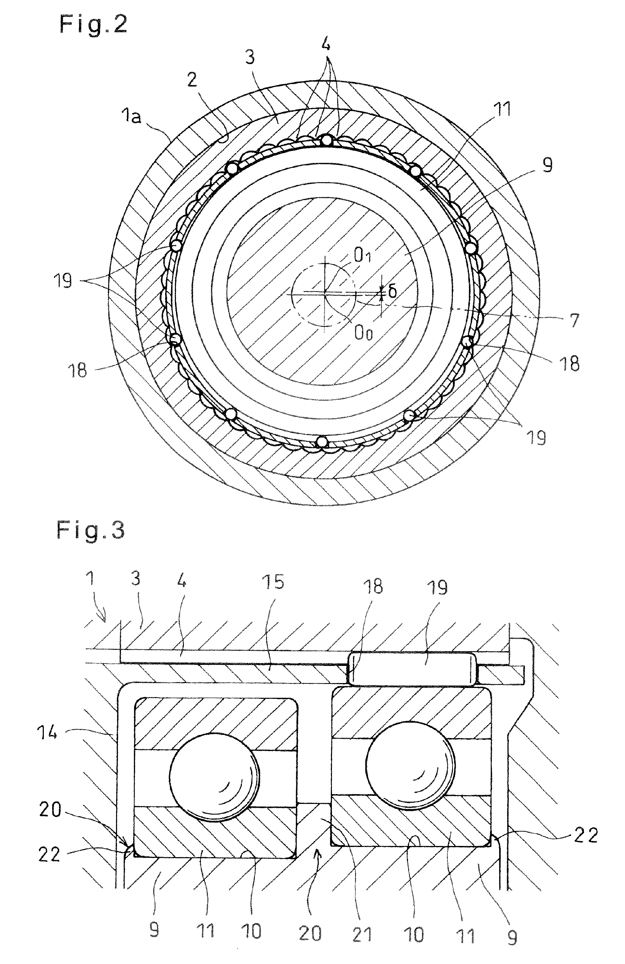

As shown in Figs. 1 and 2, an internal gear 3 is press-fitted in the large-diameter recess 2. The internal gear 3 has a plurality of internal teeth 4 on the inner periphery thereof.

As shown in Fig. 1, the first split housing portion 1a has an end wall 5 at the outer end thereof. The end wall 5 has a shaft inserting hole 6 at its center through which an input shaft 7 is inserted. The input shaft 7 is rotatably supported by a bearing 8 mounted in the shaft inserting hole 6 so as to be coaxial with the internal gear 3. The input shaft 7 carries, at its end portion located inside the housing 1, two axially spaced apart eccentric disks 9 located within the internal gear 3 and rotatable relative to the internal gear 3.

The two eccentric disks 9 have cylindrical radially outer surfaces 10 whose centers are located diametrically opposite to each other. Roller guiding bearings 11 are press-fitted on the respective radially outer surfaces 10. Roller guiding bearings 11 are ball bearings. The letter δ in Fig. 2 indicates the offset between the center O₀ of the input shaft 7 and the center O₁ of the cylindrical radially outer surface of each eccentric disk 9.

As shown in Fig. 1, an output shaft 12 is inserted in the second split housing portion 1b. The output shaft 12 is rotatably supported by bearings 13 mounted in the open end portion of the second split housing portion 1b so as to be coaxial with the input shaft 7.

The output shaft 12 has a flange 14 at its end facing the input shaft 7. The flange 14 has a cage 15 on the outer peripheral portion of its one side surface facing the input shaft 7. The cage 15 is rotatably disposed between the bearings 11 fitted on the respective eccentric disks 9 and the internal gears 3.

The flange 14 has a small-diameter hole 16 at the center of its side surface facing the input shaft. The end of the input shaft 7 is rotatably supported by a bearing 17 mounted in the small-diameter hole 16.

As shown in Figs. 1 to 3, the cage 15 has roller receiving pockets 18 arranged in two rows, with each row of pockets 18 circumferentially equidistantly spaced apart from each other and radially facing one of the bearings 11 supported on the respective two eccentric disks 9. The roller receiving pockets 18 in one row circumferentially offset from the pockets 18 in the other row by half the pitch.

The roller receiving pockets 18 in each row are fewer than the internal teeth 4 formed on the internal gear 3. A roller 19 is received in each roller receiving pocket 18 so as to be radially movable.

The rollers 19 can engage the internal teeth 4 of the internal gear 3. The internal teeth 4 each have a curved shape such that the circumferentially arranged rollers 19 can simultaneously contact internal teeth 4. In order that all of the rollers 19 can contact internal teeth 4, as described in the above-identified Patent document 1, each internal tooth 4 has a curved shape which coincides with the path of the outer portion of one roller 19 which is parallel to the path of the center of this roller 19 when the output shaft 12 is rotated by an angle corresponding to one pitch of the internal teeth 4 of the internal gear 3 by the eccentric disks 9.

In this roller type speed reducer, when the input shaft 7 rotates, and thus the eccentric disks 9 rotate, the rollers 19 mesh with the internal teeth 4 of the internal gear 3 one after another. The rollers 19 thus move circumferentially by a distance equal to the circumferential dimension of one internal tooth 4 for every rotation of the input shaft 7, thus rotating the output shaft 12 at a reduced speed.

If the input shaft 7 is inclined even slightly due to manufacturing errors of the component parts of the speed reducer and/or assembling errors while assembling the speed reducer, axial loads act on the roller guiding bearings 11 on the respective eccentric disks 9 when the input shaft 7 rotates. Such axial loads could cause separation of the roller guiding bearings 11 from the respective eccentric disks 9.

If either one of the roller guiding bearings 11 separates from the eccentric disk, this bearing 11 will come into contact with e.g. the inner surface of the housing 1, thus generating rotational resistance due to contact friction. Such rotational resistance impairs smooth rotation of the input shaft 7, reducing efficiency of the speed reducer.

In order to prevent separation of the bearings 11, in the embodiment of Fig. 3, an anti-separation means 20 is provided on the radially outer surfaces of the two eccentric disks 9, which are integral with the input shaft 7 to prevent axial movement of the respective roller guiding bearings 11.

The anti-separation means 20 includes an annular protrusion provided between the two eccentric disks 9, and crimped protrusions 22 formed by crimping the ends of the respective eccentric disks 9 remote from the axially facing ends of the respective eccentric disks. The annular protrusion 21 and the crimped protrusions 22 prevent axial movement of the bearings 11 press-fitted on the respective eccentric disks 9. The crimped protrusions 22 shown are annular protrusions but may be projections.

Since the roller guiding bearings 11 are axially held in position by the anti-separation means 20, the bearings 11 can be mounted stably, which reduces the possibility of reduced efficiency of the speed reducer due to separation of either one of the bearings 11.

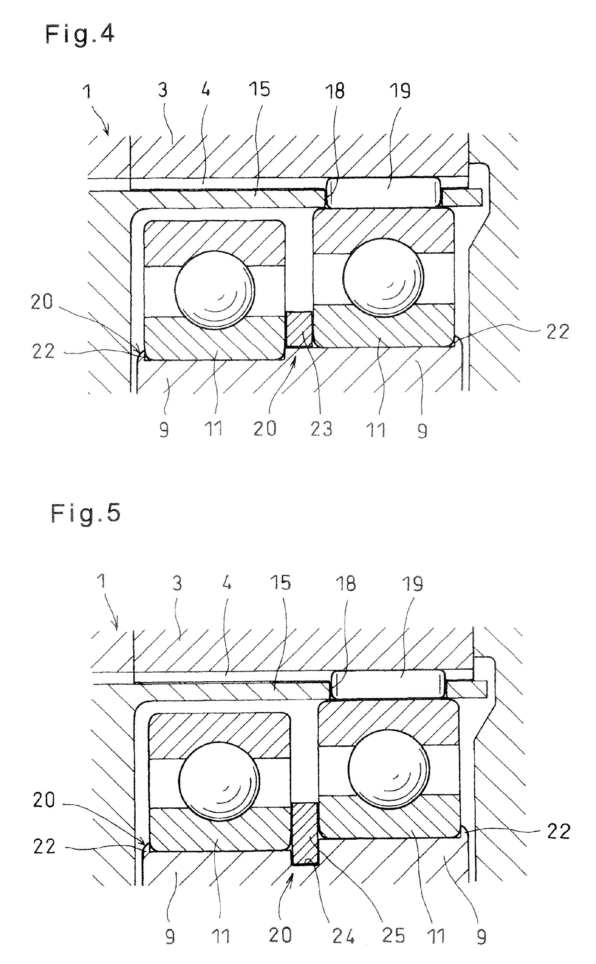

The anti-separation means 20 is not limited to the one including the annular protrusion 21 and the crimped protrusions 22 as shown in Fig. 3. Figs. 4 to 8 show different anti-separation means 20.

The anti-separation means 20 of Fig. 4 includes a spacer 23 fitted between the two eccentric disks 9, and crimped protrusions 22 formed by crimping the outer peripheral portions of the ends of the respective eccentric disks 9 remote from the axially facing ends of the respective eccentric disks. The spacer 23 and the crimped protrusions 22 prevent axial movement of the respective roller guiding bearings 11.

The anti-separation means 20 of Fig. 5 includes a snap ring 25 received in a annular groove 24 formed between the two eccentric disks 9, and crimped protrusions 22 formed by crimping the outer peripheral portions of the ends of the respective eccentric disks 9 remote from the axially facing ends of the respective eccentric disks. The snap ring 25 and the crimped protrusions 22 prevent axial movement of the respective roller guiding bearings 11.

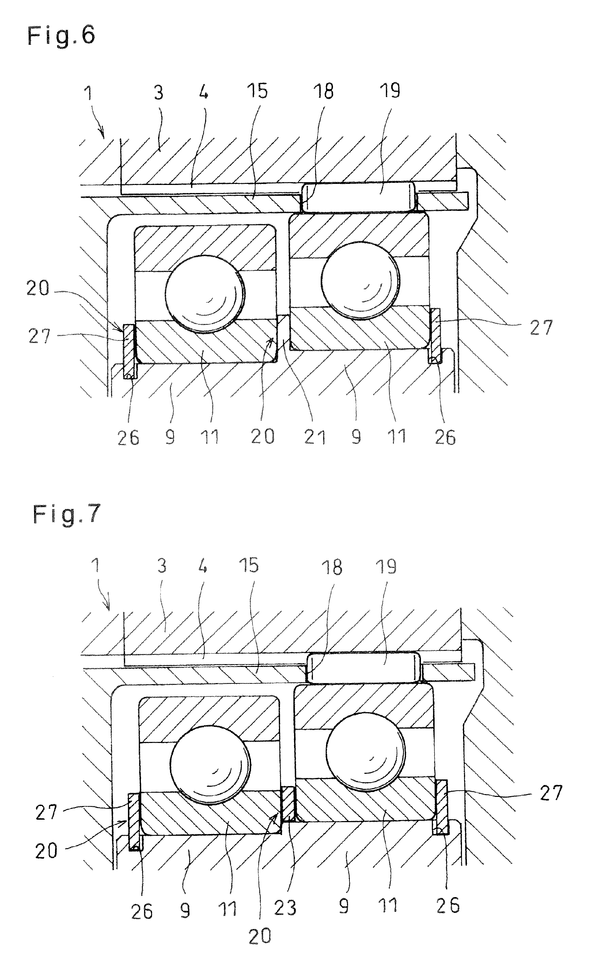

The anti-separation means 20 shown in Fig. 6 includes an annular protrusion 21 formed between the two eccentric disks 9, and snap rings 27 received in annular grooves 26 formed in outer peripheries of the respective eccentric disks 9 at the ends of the respective eccentric disks 9 remote from the axially facing ends of the respective eccentric disks. The annular protrusion 21 and the snap rings 27 prevent axial movement of the respective roller guiding bearings 11.

The anti-separation means 20 shown in Fig. 7 includes a spacer 23 fitted between the two eccentric disks, and snap rings 27 received in annular grooves 26 formed in the outer peripheries of the respective eccentric disks 9 at the ends of the respective eccentric disks 9 remote from the axially facing ends of the respective eccentric disks. The spacer 23 and the snap rings 27 prevent axial movement of the respective roller guiding bearings 11.

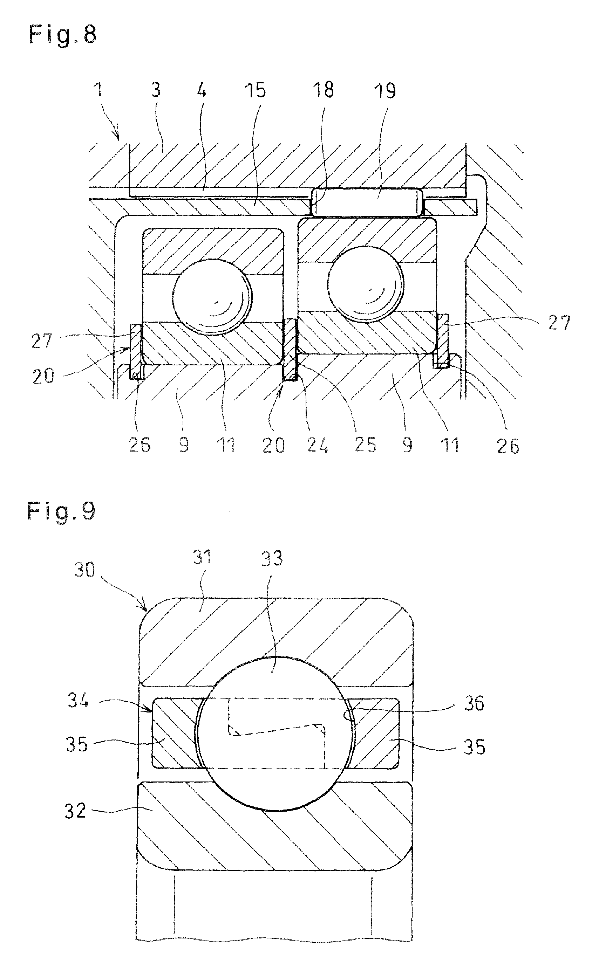

The anti-separation means 20 shown in Fig. 8 includes a snap ring 25 received in an annular groove 24 formed between the two eccentric disks 9, and snap rings 27 received in annular grooves 26 formed in the outer peripheries of the respective eccentric disks 9 at the ends of the respective eccentric disks 9 remote from the axially facing ends of the respective eccentric disks. The three snap rings 25 and 27 are spaced apart from each other corresponding to the widths of the roller guiding bearings 11, thereby preventing axial movement of the respective roller guiding bearings 11.

Any of the anti-separation means 20 shown in Figs. 4 to 8 can reliably prevent separation of the roller guiding bearings 11.

The roller type speed reducer shown in Fig. 1 is mainly used for motor vehicles and is dipped in oil bath. Thus, the bearings 11 fitted on the radially outer surfaces of the eccentric disks 9, as well as the bearings 8 and 13, which rotatably support the input shaft 7 and the output shaft 12, are lubricated by oil of the oil bath. Thus, for these bearings, it is preferable to use low-torque bearings, of which the torque loss is low.

Figs. 9 to 17 show ball bearings suitable for use in such a roller type speed reducer. The ball bearing 30 shown in Fig. 9 includes an outer race 31, an inner race 32, balls 33 mounted between the outer and inner races 31 and 32, and a retainer 34 retaining the balls 33.

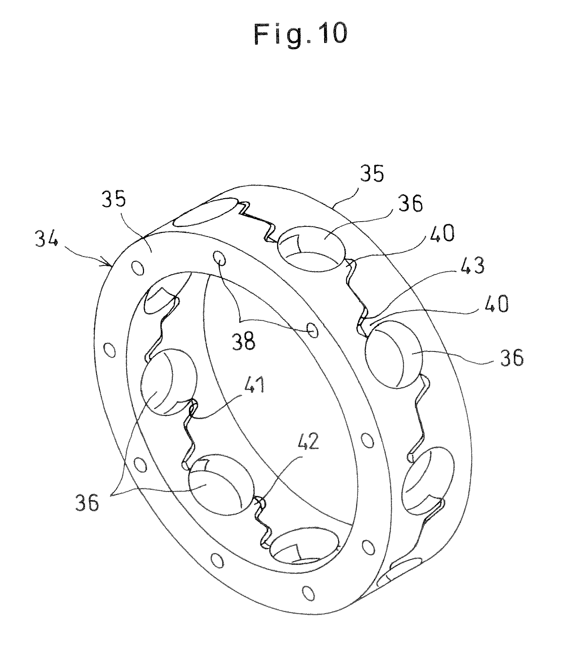

As shown in Figs. 10 to 14, the retainer 34 includes two annular members 35 made of a synthetic resin, which is preferably a resin having excellent lubricity and resistance, such as polyamide resin, polyetheretherketone resin, or polyphenylene sulfide resin.

The two annular members 35 are combined so as to axially face each other. The annular members 35 each have a plurality of circumferentially equidistantly spaced apart ball receiving hemispherical pockets 36 in its surface axially facing the other annular member. A pillar 37 is defined between each adjacent pair of ball receiving pockets 36. The two annular members 35 are coupled together in the axial direction with the axial end surfaces of the pillars 37 of one annular member kept in abutment with the corresponding axial end surfaces of the pillars 37 of the other annular member.

By forming, the ball receiving pockets 36 in the surfaces of the two annular members 35 which axially face each other when the annular members are axially coupled together, and by forming holes 38 axially extending through the respective pillars 37 defined between the adjacent ball receiving pockets 36, when lubricating oil flow through the interior of the bearing, lubricating oil also flows through the holes 38 of the pillars 37.

This reduces the total amount of lubricating oil that flows into the gap between the radially inner surface of the outer race 31 and the radially outer surface of the retainer 34, and lubricating oil flowing through the gap between the radially outer surface of the inner race 32 and the radially inner surface of the retainer 34 into the pocket gaps defined between the ball receiving pockets 36 and the balls 33, thereby reducing the shear resistance of lubricating oil by the balls 33, and thus the torque loss in the ball bearing. By using bearings of this type as the roller guiding bearings 11 of the speed reducer shown in Fig. 1, and/or as the bearings for supporting the input shaft 7 and the output shaft 12, it is possible to reduce torque loss and improve efficiency of the speed reducer.

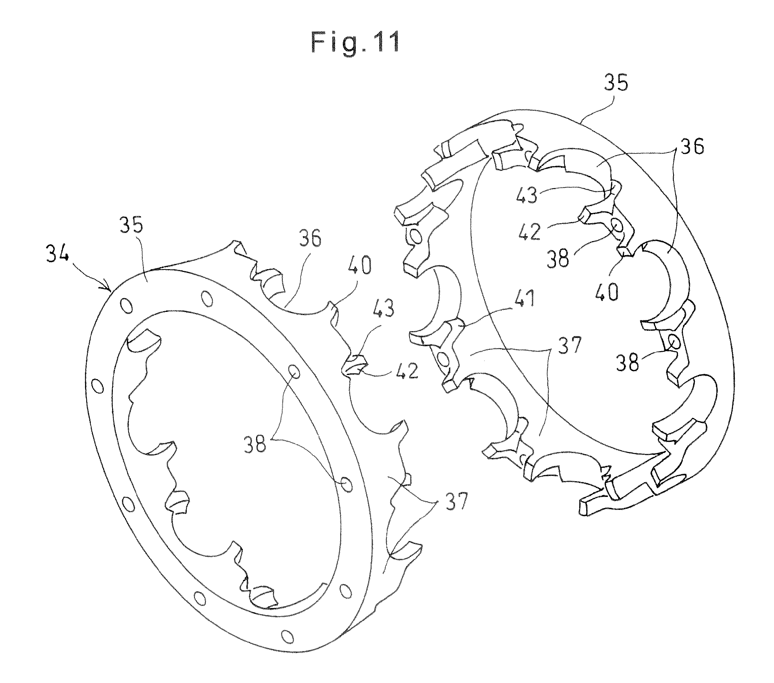

In the embodiment of Figs. 11 to 14, each annular member 35 has a radially outer protrusion 40 axially extending from the radially outer portion of one circumferential end of each ball receiving pocket 36 and defining a spherical inner surface continuous with the spherical inner surface of the ball receiving pocket 36, and a radially inner recess 41 formed radially inwardly of the radially outer protrusion 40. At the other circumferential end of each ball receiving pocket 36, a radially inner protrusion 42 extends axially from the radially inner portion of the other end of the pocket so as to define a spherical inner surface continuous with the spherical inner surface of the ball receiving pocket 36. A radially outer recess 43 is formed radially outwardly of the radially inner protrusion 42. When coupling the two annular members 35; the radially outer protrusions 40 of each annular member 35 are inserted into the respective radially outer recesses 43 of the other annular member 35 such that the radially outer protrusions 40 axially engage the respective radially inner protrusions 42.

The radially outer protrusions 40 and the radially inner protrusions 42 have mutually engaging surfaces 44 which inclined at angle θ of 5° or over with respect to the axis of the bearing such that the thickness of each of the radially outer and radially inner protrusions 40 and 42 increases from its proximal end to distal end.

By inserting the radially outer protrusions 40 of each annular member 35 into the respective radially outer recesses 43 of the other annular member 35 such that the axially inclined engaging surfaces 44 of the radially outer protrusions 40 and the radially inner protrusions 42 axially engage each other, the two annular members 35 can be axially strongly coupled together. This prevents axial separation of the annular members.

Since the two annular members 35 are identical in shape, they can be formed using a single common mold and thus at a low cost.

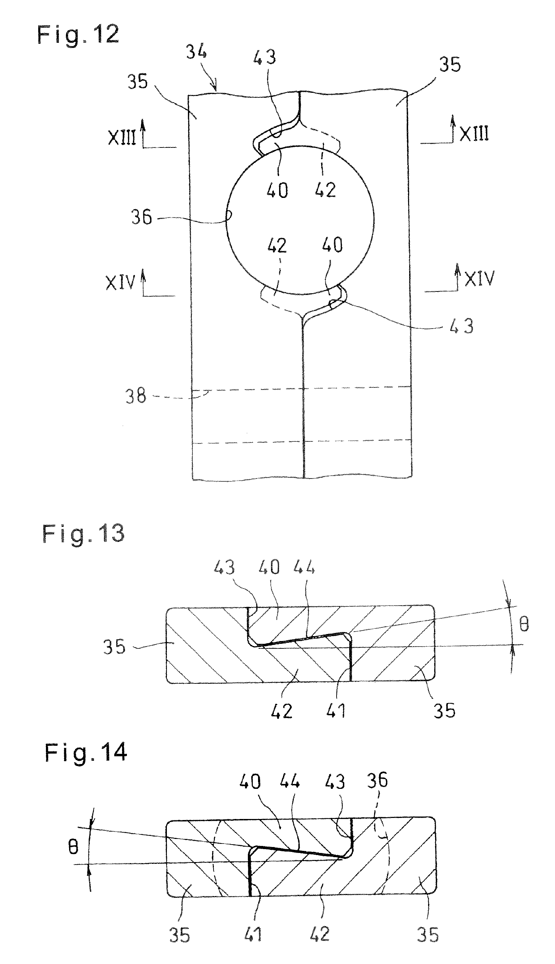

As shown in Figs. 13 and 14, the radially inner protrusions 42 preferably have a larger average thickness than the radially outer protrusions 40. With this arrangement, when a large centrifugal force due to high-speed rotation acts on the annular members 35 with the annular members 35 coupled together by the engagement between the radially outer protrusion 40 and the radially inner protrusions 42, since the radially inner protrusions 42 has a larger mass than the radially outer protrusions 40, the radially inner protrusions 42 are radially outwardly deformed more markedly than the radially outer protrusions, so that the engaging surfaces 44 are engaged more strongly. This more reliably prevents axial separation of the two annular members 35.

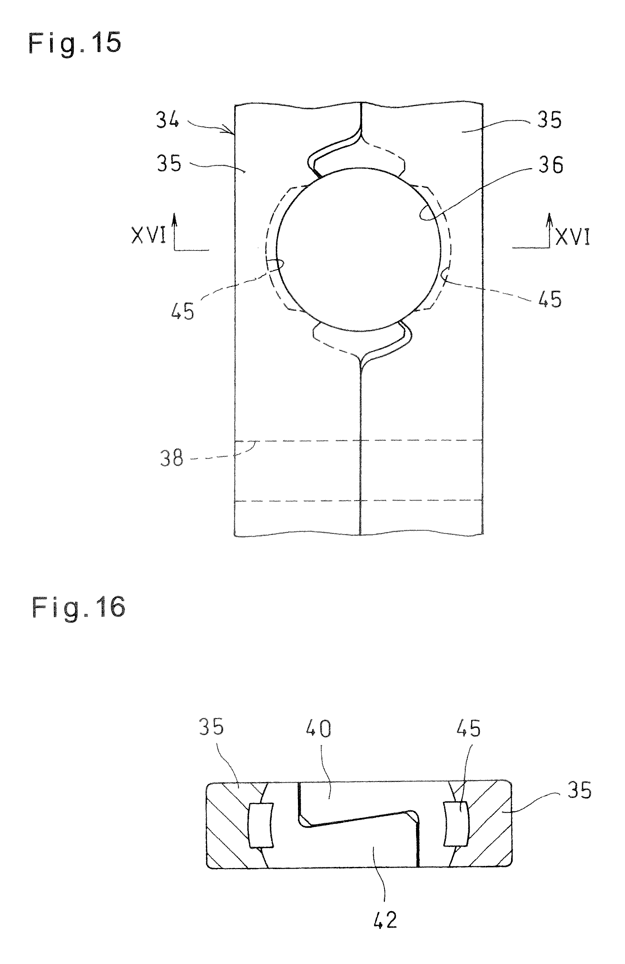

Preferably, as shown in Figs. 15 and 16, a recess 45 is formed in the inner periphery of each ball receiving pocket 36 to reduce the contact surface area between the ball receiving pocket 36 and the ball 33, thereby further reducing the shear resistance of lubricating oil by the balls 33.

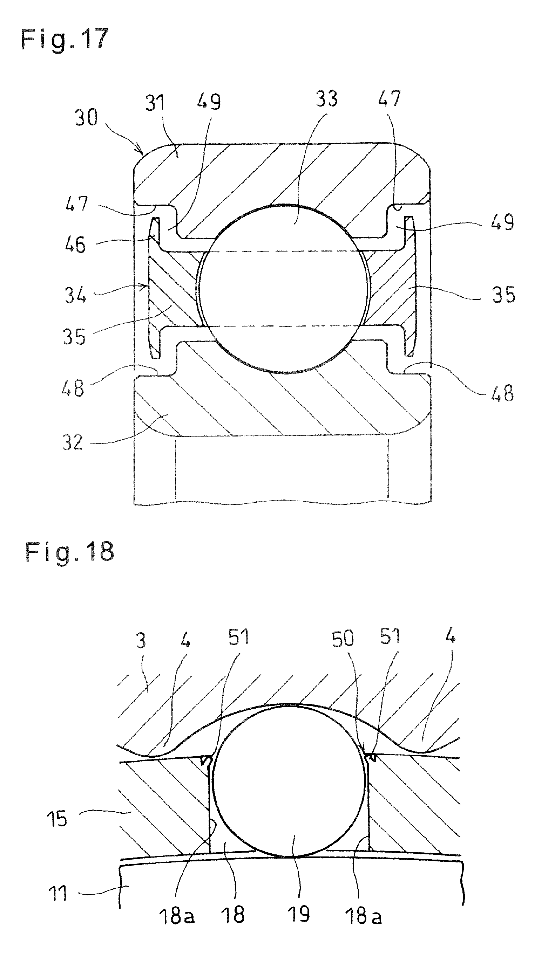

Further preferably, as shown in Fig. 17, flanges 46 are formed on each annular member 35 at its axial end, and the inner and outer races 31 and 32 are formed with large-diameter recesses 47 and 48, respectively, for receiving the flanges 46, thereby defining a labyrinth 49 between each flange 46 and the corresponding large-diameter recesses 47 and 48. The labyrinths 49 reduce the amount of lubricating oil flowing into the bearing, thereby further reducing the shear resistance of lubricating oil by the balls 33.

Figs. 18 to 22 show different speed reducers. In the embodiment of Fig. 18, the cage 15 has a roller stopper means 50 for preventing separation of the rollers 19. The roller stopper means 50 includes opposed pairs of crimped projections 51 formed on the circumferentially opposed pair of side surfaces 18a of each roller receiving pocket 18 near the opening of the pocket 18 on the radially outer side of the cage by crimping the radially outer surface of the cage 15 near the radially outer opening of the pocket 18. The opposed pairs of crimped projections 51 are arranged such that the distance therebetween is shorter than the outer diameter of the roller 19, thereby preventing the roller 19 from coming out of the pocket 18 through the radially outer opening of the pocket 18.

By preventing each roller 19 from coming out of the roller receiving pocket 18 radially outwardly of the cage with the opposed pairs of crimped projections 51 formed at the opening of the pocket 18 at the radially outer surface of the cage, it is possible to prevent the rollers 19 from coming out of the pockets both radially inwardly and outwardly of the cage 15 by inserting the rollers into the respective pockets 18 from radially inside the cage 15, and then by inserting the eccentric disks 9 into the cage 15 with the bearings 11 mounted on the respective eccentric disks 9.

In assembling this speed reducer, it is not necessary to retain the rollers 19 in the respective pockets 18 so as not to come out of the pockets. Thus, the speed reducer can be assembled extremely easily by mounting the cage 15 in the internal gear 3 while preventing separation of the rollers 19.

Alternatively, after mounting the eccentric disks 9 in the cage 15, the rollers 19 may be forcibly pushed into the respective pockets 18 from radially outside the cage, thereby preventing separation of the rollers 19.

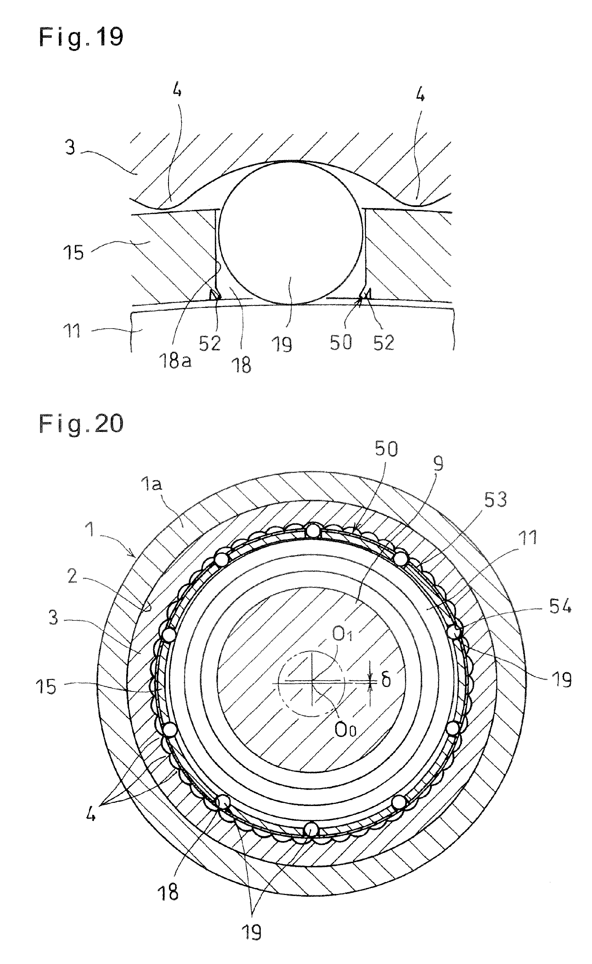

In Fig. 18, the opposed pairs of crimped projections 51 are formed at the opening of each pocket 18 on the radially outer side of the cage to prevent the roller 19 from radially outwardly separating from the cage. But instead, as shown in Fig. 19, opposed pairs of crimped projections 52 may be formed at the opening of each pocket 18 on the radially inner side of the cage to prevent the roller 19 from radially inwardly separating from the cage.

If the roller stopper means 50 of Fig. 19 is used, the rollers 19 are inserted into the respective pockets 18 from radially outside the cage 15, and then the cage 15 is mounted inside of the internal gear 3 such that the rollers 19 cannot separate both radially outwardly and inwardly from the cage 15. In this state, the eccentric disks 9 are mounted in position to assemble the speed reducer.

In the embodiments of Figs. 18 and 19, the crimped projections 51 and 52 are used to prevent separation of the rollers 19. But instead of such opposed pairs of projections, ribs may be formed that are elongated in the axial direction of the cage.

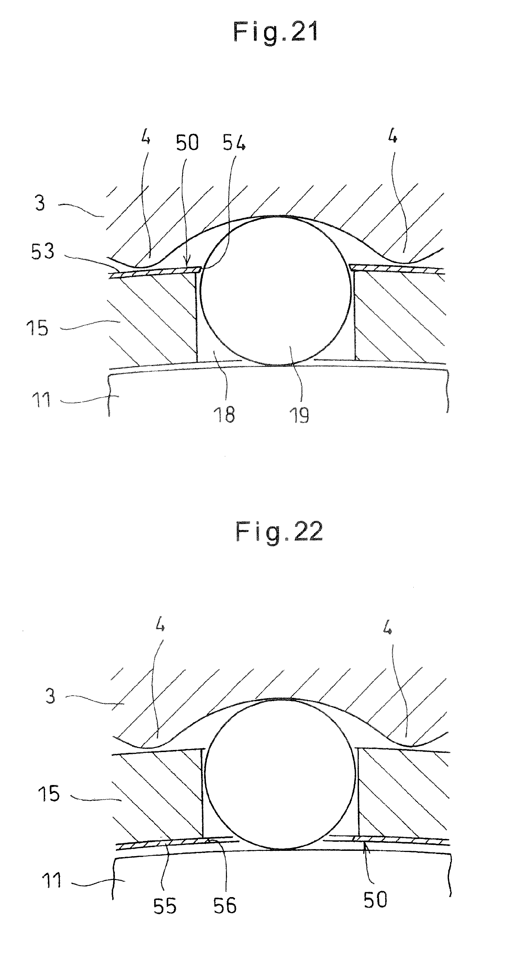

Figs. 20 and 21 show a different roller stopper means 50, which includes a tubular member 53 fitted on the radially outer surface of the cage 15 and formed with rectangular windows 54 aligned with the respective pockets 18 and having a circumferential width smaller than the outer diameter of the rollers 19, thereby preventing the rollers 19 from radially outwardly separating from the cage.

The tubular member 53 may be formed by pressing, i.e. deep-drawing a metal member, or may be in the form of a seamed metal tube formed by punching the pockets 18 in a thin metal sheet with a punching press, bending the metal sheet into a tubular shape, and welding the abutted side edges. Further alternatively, the tubular member may be formed from a synthetic resin.

In the arrangement of Figs. 20 and 21, the tubular member 53 having the rectangular windows 54 is fitted on the radially outer surface of the cage 15 to prevent the rollers 19 from radially outwardly separating from the cage. But instead, as shown in Fig. 22, a tubular member 55 formed with rectangular windows 56 having a circumferential width smaller than the outer diameter of the rollers 19 may be fitted in the radially inner surface of the cage 15 such that the windows 56 are aligned with the respective pockets 18, thereby preventing the rollers 19 from radially inwardly separating from the cage.

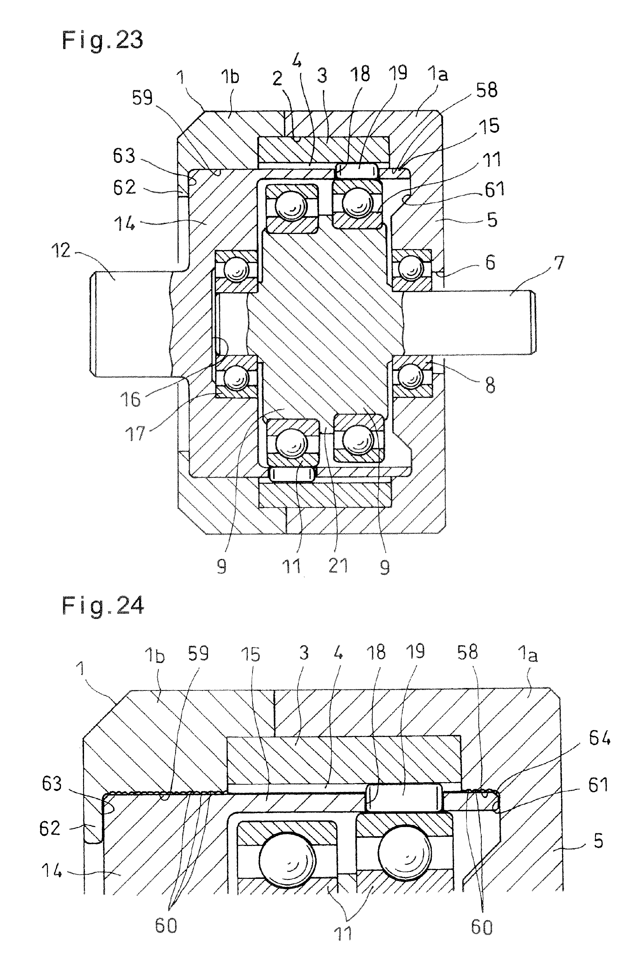

Figs. 23 to 26 show further different speed reducers. In the embodiment of Figs. 23 and 24, the first split housing portion 1a of the housing 1 is formed with a radial bearing surface 58 on its inner periphery which guides, by metal-to-metal contact, the radially outer surface of the cage 15 at its open end portion. The second split housing portion 1b is formed with a radial bearing surface 59 on its inner periphery which guides, by metal-to-metal contact, the radially outer surface of the flange 14. The radial bearing surfaces 58 and 59 are formed with minute recesses 60 for retaining lubricating oil, by shot peening.

The end wall 5 of the first split housing portion 1a is formed with a thrust bearing surface 61 on its inner side surface which axially faces the end surface of the cage 15 at its open end. The second split housing portion 1b has a radially inwardly extending flange 62 at its open end. The inwardly extending flange 62 has a thrust bearing surface 63 on its inner side surface which axially faces the outer peripheral portion of the other side surface of the flange 14 of the output shaft 12. The cage 15 is axially held in position by the thrust bearing surfaces 61 and 63.

A chamfer 64 is formed on the outer peripheral portion of the end surface of the cage 15 at the open end of the cage 15. In Fig. 24, the chamfer 64 is an inclined surface. But the chamfer 64 is not limited to an inclined surface but may be e.g. a circular arc-shaped surface.

In the embodiment of Figs. 23 and 24, while the output shaft 12 is being driven at a reduced speed, the radially outer surface of the cage 15 at its open end portion and the radially outer surface of the flange 14 are guided by the radial bearing surfaces 58 formed on the inner periphery of the first split housing portion 1a and the radial bearing surface 59 formed on the inner periphery of the second split housing portion 1b, respectively, due to metal-to-metal contact therebetween. In this state, since the metal-to-metal contact guide portions are located on both sides of and close to the rollers 17 through which torque is transmitted to the cage 15, the output shaft 12 rotates with high accuracy without run-out and without inclining.

Since the end surface of the cage 15 at its open end is rotatably supported by the thrust bearing surface 61 formed on the end wall 5, while the outer peripheral portion of the other side surface of the flange 14 is rotatable supported by the thrust bearing surface 63 formed on the inner side of the radially inwardly extending flange 62, thrust loads applied to the cage 15 are supported by the thrust bearing surfaces 61 and 63.

The output shaft 12 can thus rotate in a stationary position with high accuracy without oscillating in the axial direction.

Since the radially outer surface of the cage 15 at its open end portion and the radially outer surface of the flange 14 are guided by the radial bearing surfaces 58 formed on the inner periphery of the first split housing portion 1a and the radial bearing surface 59 formed on the inner periphery of the second split housing portion 1b, respectively, due to metal-to-metal contact therebetween, the speed reducer of this embodiment is shorter in axial length than the speed reducer shown in Fig. 1, in which the output shaft 12 is rotatably supported by the two bearings 13.

The minute recesses 60 formed on the respective radial bearing surfaces 58 and 59 by shot peening serve to retain lubricating oil therein, thus preventing seizure of the radial bearing surfaces 58 and 59.

The chamfer 64 formed on the outer peripheral portion of the end surface of the cage 15 at its open end reduces stress on the outer edge of the end surface of the cage at its open end, effectively preventing damage to the cage.

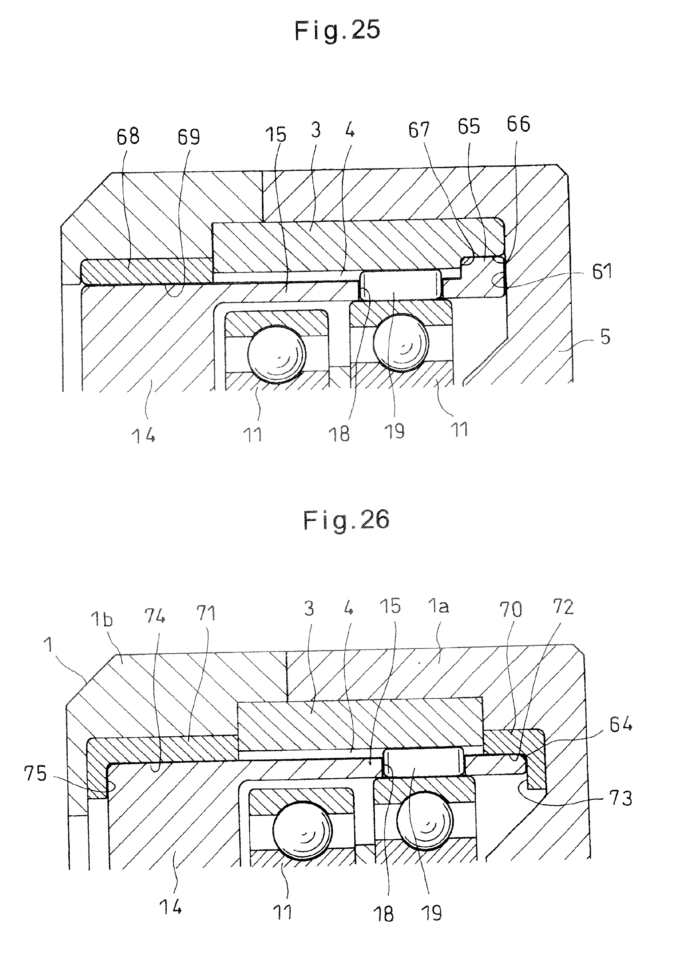

In the embodiment of Fig. 25, an annular protrusion 65 is formed on the outer periphery of the cage 15 at its open end portion. A radial bearing surface 66 and a thrust bearing surface 67 are formed on the radially inner surface of the internal gear 3 at one end thereof such that the radial bearing surface 66 rotatably supports the radially outer surface of the annular protrusion 65 and the thrust bearing surface 67 supports the side surface of the annular protrusion 65. A metal bearing 68 is press-fitted in the radially inner surface of the second split housing portion 1b to rotatably support the radially outer surface of the flange 14 by a radial bearing surface 69 formed on the radially inner surface of the metal bearing 68.

The metal bearing 68 may be formed by pressing a thin metal sheet, or may be formed from a sintered metal. It may be an oil-containing bearing too.

As shown in Fig. 25, since the radial bearing surface 66 formed on the radially inner surface of the internal gear 3 at the one end thereof rotatably supports the radially outer surface of the annular protrusion 65 formed on the cage 15, while the metal bearing 68 press-fitted in the radially inner surface of the second split housing portion 1b rotatably supports the radially outer surface of the flange 14, the housing 1 can be formed from die-cast aluminum, thereby providing a lightweight speed reducer.

Since the thrust bearing surface 67 formed on the internal gear 3 and the thrust bearing surface 61 formed on the outer peripheral portion of the inner side surface of the end wall 5 rotatably supports the respective side surfaces of the annular protrusion 65, thrust loads applied to the cage 15 are supported by the thrust bearing surfaces 61 and 67. This prevents axial oscillation of the output shaft 12, and thus makes it possible to stably transmit torque.

In the embodiment of Fig. 26, metal bearings 70 and 71 are press-fitted in the radially inner surface of the first split housing portion 1a and the radially inner surface of the second split housing portion 1b, respectively. The metal bearing 70, which is press-fitted in the first split housing portion 1a, has a radial bearing surface 72 which guides, by metal-to-metal contact, the radially outer surface of the cage 15 at its open end portion, and a thrust bearing surface 73 which supports the end surface of the casing 15 at its open end. The metal bearing 71, which is press-fitted in the second split housing portion 1b, has a radial bearing surface 74 which guides, by metal-to-metal contact, the radially outer surface of the flange 14, and a thrust bearing surface 75 which supports the outer peripheral portion of the other side surface of the flange 14.

Like the metal bearing of the second embodiment, the metal bearings 70 and 71 may be formed by pressing a thin metal sheet, formed from a sintered metal, or may be an oil-containing bearing.

Since, as shown in Fig. 26, the metal bearing 70 press-fitted in the radially inner surface of the first split housing portion 1a rotatably supports the radially outer surface of the cage 15 at its open end portion, while the metal bearing 71 press-fitted in the radially inner surface of the second split housing 1b rotatably support the radially outer surface of the flange 14, as in the embodiment shown in Fig. 25, the housing 1 can be formed from die-cast aluminum, thereby providing a lightweight speed reducer.

The thrust bearing surfaces 73 and 75 of the respective metal bearings 70 and 71 support thrust loads applied to the cage 15, thus preventing axial oscillation of the output shaft 12, which in turn allows stable transmission of torque.

**DESCRIPTION OF THE NUMERALS**

| | |
|---|---|
| 1. | Housing |
| 3. | Internal gear |
| 4. | Internal tooth |
| 7. | Input shaft |
| 8. | Bearing |
| 9. | Eccentric disk |
| 11. | Roller guiding bearing |
| 12. | Output shaft |
| 13. | Bearing |
| 14. | Flange |
| 15. | Cage |
| 18. | Roller receiving pocket |
| 19. | Roller |
| 20. | Anti-separation means |
| 21. | Annular protrusion |
| 22. | Crimped protrusion |
| 23. | Spacer |
| 25, 27. | Snap ring |
| 30. | Ball bearing |
| 31. | Outer race |
| 32. | Inner race |
| 33. | Ball |
| 34. | Retainer |
| 35. | Annular member |
| 36. | Ball receiving pocket |
| 37. | Pillar |
| 38. | Hole |
| 40. | Radially outer protrusion |
| 41. | Radially inner recess |
| 42. | Radially inner protrusion |
| 43. | Radially outer recess |
| 44. | Engaging surface |
| 45. | Recess |
| 46. | Flange |
| 49. | Labyrinth |
| 50. | Roller stopper means |
| 51, 52. | Crimped protrusion |
| 53, 55. | Tubular member |
| 54, 56. | Window |
| 58, 59, 66, 69, 72, 74. | Radial bearing surface |
| 60. | Recess |
| 61, 63, 67, 73, 75. | Thrust bearing surface |

## Claims

1. A speed reducer comprising a stationary internal gear, an input shaft carrying two eccentric disks at one end portion of the input shaft so as to rotate together with the input shaft, roller guiding bearings press-fitted on radially outer surfaces of the respective eccentric disks, an output shaft provided coaxially with the input shaft and including a flange at one end portion of the output shaft, a cage provided on one side surface of the flange facing the one end portion of the input shaft and rotatable between the internal gear and the eccentric disks, the cage having first and second sets of circumferentially equidistantly spaced apart roller receiving pockets radially facing the respective eccentric disks, each of the first and second sets of pockets being fewer than the number of internal teeth formed on an inner periphery of the internal gear, and rollers received in the respective roller receiving pockets so as to mesh with the internal teeth, whereby when the input shaft rotates once, the respective rollers move circumferentially by a distance equal to one internal tooth while meshing with the internal teeth one after another, thereby rotating the output shaft at a reduced speed,
**characterized in that** the speed reducer further comprises anti-separation means for preventing axial movement of the respective roller guiding bearings, which are press-fitted on the respective eccentric disks.

2. The speed reducer of claim 1, wherein the anti-separation means comprises an annular protrusion provided between the two eccentric disks, and crimped protrusions formed on outer peripheral portions of ends of the respective eccentric disks remote from axially facing ends of the respective eccentric disks.

3. The speed reducer of claim 1, wherein the anti-separation means comprises a spacer fitted between the two eccentric disks, and crimped protrusions formed on outer peripheral portions of ends of the respective eccentric disks remote from axially facing ends of the respective eccentric disks.

4. The speed reducer of claim 1, wherein the anti-separation means comprises a snap ring mounted between the two eccentric disks, and crimped protrusions formed on outer peripheral portions of ends of the respective eccentric disks remote from axially facing ends of the respective eccentric disks.

5. The speed reducer of claim 1, wherein the anti-separation means comprises an annular protrusion provided between the two eccentric disks, and snap rings mounted to outer peripheral portions of ends of the respective eccentric disks remote from axially facing ends of the respective eccentric disks.

6. The speed reducer of claim 1, wherein the anti-separation means comprises a spacer fitted between the two eccentric disks, and snap rings mounted to outer peripheral portions of ends of the respective eccentric disks remote from axially facing ends of the respective eccentric disks.

7. The speed reducer of claim 1, wherein the anti-separation means comprises a snap ring mounted between the two eccentric disks, and snap rings mounted to outer peripheral portions of ends of the respective eccentric disks remote from axially facing ends of the respective eccentric disks.

8. The speed reducer of any of claims 1 to 7, wherein at least one of the roller guiding bearings, a bearing rotatably supporting the input shaft, and a bearing rotatably supporting the output shaft is a ball bearing comprising inner and outer races, balls disposed between the inner and outer races, and a retainer retaining the balls, wherein the retainer comprises two axially facing annular members each formed with circumferentially equidistantly spaced apart hemispherical ball receiving pockets in a surface facing the other annular member, and wherein each circumferentially adjacent pair of the hemispherical pockets define a pillar therebetween through which an axial hole is formed.

9. The speed reducer of claim 8, wherein a recess is formed in an inner periphery of each of the ball receiving pockets.

10. The speed reducer of claim 8 or 9, wherein each of the annular members is formed with radially extending flanges at an axial end of the annular member.

11. The speed reducer of any of claims 8 to 10, wherein each of the annular members has a radially outer protrusion axially extending from the radially outer portion of one circumferential end of each ball receiving pocket and defining a spherical inner surface continuous with the spherical inner surface of the ball receiving pocket, and a radially inner recess formed radially inwardly of the radially outer protrusion, wherein at the other circumferential end of each ball receiving pocket, a radially inner protrusion extends axially from the radially inner portion of the other end of the pocket so as to define a spherical inner surface continuous with the spherical inner surface of the ball receiving pocket, wherein a radially outer recess is formed radially outwardly of the radially inner protrusion, whereby when the radially outer protrusions of each of the annular members are inserted into the respective radially outer recesses of the other annular member, the radially outer protrusions axially engage the respective radially inner protrusions, and wherein engaging surfaces of the radially outer protrusions and the radially inner protrusions are inclined in the axial direction such that each of the radially outer protrusions and the radially inner protrusions has a larger wall thickness at a distal end thereof than at a proximal end thereof.

12. The speed reducer of claim 11, wherein the radially inner protrusions have a larger wall thickness than the radially outer protrusions.

13. The speed reducer of any of claims 8 to 12, wherein the annular members are formed from a synthetic resin.

14. The speed reducer of claim 13, wherein the synthetic resin is one of polyamide resin, polyetheretherketone resin, and polyphenylene sulfide resin.

15. The speed reducer of any of claims 1 to 14, wherein each of the roller receiving pockets includes stopper means for preventing the roller received in the roller receiving pocket from coming out of the pocket through at least one of openings of the pocket at radially inner and outer surfaces of the cage.

16. The speed reducer of claim 15, wherein the stopper means comprises pairs of protrusions, each pair being provided on circumferentially opposed pair of side surfaces of each of the roller receiving pockets, respectively, at least at one of inner and outer ends of each side surface with respect to the radial direction of the cage.

17. The speed reducer of claim 16, wherein the protrusions as the stopper means are crimped projections formed by crimping portions of the pockets near openings of the pockets.

18. The speed reducer of claim 15, wherein the stopper means comprises a tubular member fitted in a radially inner surface or a radially outer surface of the cage and formed with rectangular windows facing the respective pockets of the cage and having a circumferential width smaller than an outer diameter of the rollers.

19. The speed reducer of any of claims 1 to 18, wherein a pair of radial bearing surfaces are formed on an inner side of the housing which guides, by metal-to-metal contact, a radially outer surface of the flange and a radially outer surface of the cage at an open end portion of the cage, respectively.

20. The speed reducer of claim 19, wherein each of the pair of radial bearing surfaces is formed with minute recesses for retaining lubricating oil, by shot peening.

21. The speed reducer of any of claims 1 to 20, wherein the housing is formed with thrust bearing surfaces axially facing an outer peripheral portion of another side surface of the flange and an end surface of the cage at the open end of the cage, respectively.
